# FASCICULE DE BREVET EUROPEEN

(11) **EP 3 722 585 B1**
(45) Date de publication et mention de la délivrance du brevet: **05.01.2022**
(21) Numéro de dépôt: 20160015.2
(22) Date de dépôt: 28.02.2020
(51) Int. Cl.: F02K 1/72

(54) **TURBOREACTEUR DOUBLE FLUX COMPORTANT UNE SERIE DE LAMES ROTATIVES POUR OBTURER LA VEINE DU FLUX SECONDAIRE**
DOPPELSTROM-TURBOTRIEBWERK, DAS EINE REIHE VON ROTIERENDEN SCHAUFELBLÄTTERN UMFASST, UM DEN KANAL DES SEKUNDÄRSTROMS ABZUDICHTEN
DUAL-FLOW TURBOJET ENGINE COMPRISING A SERIES OF ROTARY STRIPS FOR BLOCKING THE SECONDARY FLOW STREAM

(30) Priorité: 09.04.2019 FR 1903765
(43) Date de publication de la demande: 14.10.2020
(73) Titulaire: AIRBUS OPERATIONS (S.A.S.), 31060 Toulouse (FR)
(72) Inventeur: GARDES, Pascal, 31060 TOULOUSE Cedex 9 (FR); SABATHIER, Bastian, 31060 TOULOUSE Cedex 9 (FR); BOUDOU, Antoine, 31060 TOULOUSE Cedex 9 (FR)
(74) Mandataire: Gicquel, Olivier Yves Gérard

(56) Documents cités:
- US-A- 2 933 890
- US-A- 4 030 290

## Description

La présente invention concerne un turboréacteur double flux qui comporte une série de lames qui sont montées rotatives pour obturer la veine du flux secondaire, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée. En outre, le déplacement de chaque porte d'inversion est réalisé à l'aide d'une bielle qui traverse la veine secondaire en position escamotée et qui obstrue donc partiellement la veine secondaire.

Bien que les portes d'inversion donnent entière satisfaction, il est souhaitable de trouver des mécanismes différents, en particulier des mécanismes moins lourds et qui ne présentent aucune obstruction du flux secondaire en position escamotée.

On connaît le document US2933890 qui décrit un système de manœuvre, arrangé dans un turboréacteur simple flux, pour obturer un passage d'air au moyen de lames rotatives.

Un objet de la présente invention est de proposer un turboréacteur double flux qui comporte une série de lames qui sont montées rotatives pour obturer la veine du flux secondaire. A cet effet, est proposé un turboréacteur double flux tel que revendiqué dans la revendication 1.

Un tel turboréacteur permet une réduction de masse en remplaçant les portes d'inversion et leurs mécanismes d'entraînement par des lames pivotantes plus légères avec un système de manœuvre simplifié.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- La figure 1 est une vue de côté d'un aéronef comportant un turboréacteur double flux selon l'invention,
- La figure 2 est une vue en perspective du turboréacteur double flux selon l'invention en position avancée et escamotée,
- La figure 3 est une vue en perspective du turboréacteur double flux selon l'invention, en position reculée et déployée,
- La figure 4 est une représentation schématique d'un turboréacteur double flux selon l'invention vu en coupe par un plan vertical, et
- La figure 5 est une vue en perspective d'un système de manœuvre selon l'invention.

Dans la description qui suit, les termes relatifs à une position sont pris en référence au sens d'écoulement de l'air dans un turboréacteur qui s'écoule donc de l'avant vers l'arrière de l'aéronef.

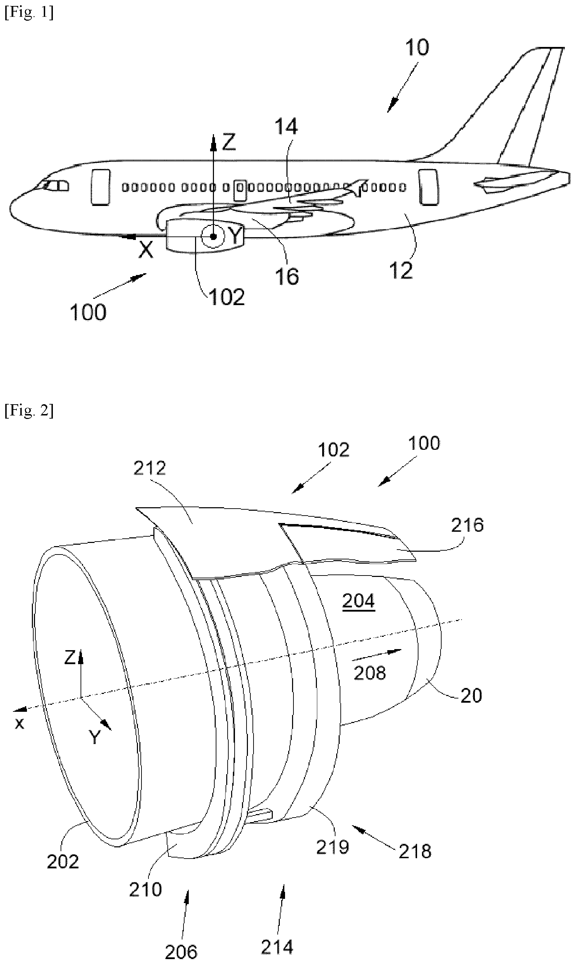

La figure 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

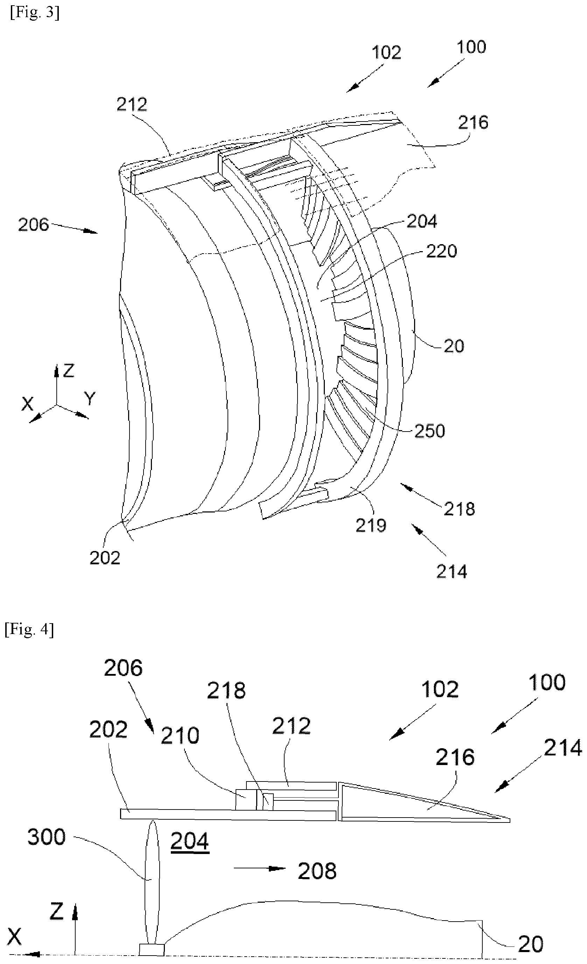

Les figures 2 et 3 montrent le turboréacteur double flux 100 qui présente une nacelle 102 et un moteur 20 qui est logé à l'intérieur de la nacelle 102 et qui comporte un carter de soufflante 202. Le moteur 20 est matérialisé par sa partie arrière d'éjection.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

Les figures 2 et 3 montrent le turboréacteur double flux 100 dans deux positions d'utilisation différentes et la figure 4 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 formant une surface aérodynamique qui sont montrés en transparence sur la figure 3 et dont une partie est découpée sur les figures 2 et 3.

La nacelle 102 présente un ensemble mobile 214 qui présente un capot mobile 216 (également en transparence sur la figure. 3) dont une partie est découpée sur les figures 2 et 3 et qui forme les parois extérieures de la tuyère.

La nacelle 102 présente également un coulisseau 218. Le coulisseau 218 prend ici la forme d'un cylindre à parois ajourées. Le capot mobile 216 est fixé au et en aval du coulisseau 218 par rapport au sens d'écoulement du flux d'air dans le turboréacteur double flux 100.

Le coulisseau 218 est monté mobile en translation selon une direction de translation globalement parallèle à l'axe longitudinal X sur la structure fixe 206 de la nacelle 102.

Le coulisseau 218 est mobile entre une position avancée (fig. 2) et une position reculée (fig. 3) et inversement. En position avancée, le coulisseau 218 est positionné le plus en avant possible par rapport au sens d'écoulement de manière à ce que le capot mobile 216 soit rapproché des panneaux extérieurs 212 et du carter de soufflante 202 et forme ainsi une surface aérodynamique. En position reculée, le coulisseau 218 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100.

La translation du coulisseau 218 est réalisée par tous moyens appropriés, comme par exemple, des systèmes de glissières entre la structure fixe 206 et le coulisseau 218.

La nacelle 102 comporte également un ensemble d'actionneurs (non représentés) assurant le déplacement en translation du coulisseau 218 entre la position avancée et la position reculée et inversement. Chaque actionneur est commandé par une unité de contrôle, par exemple du type processeur, qui commande les déplacements dans un sens ou dans l'autre selon les besoins de l'aéronef 10.

Chaque actionneur peut prendre par exemple la forme d'un vérin à double effet (deux directions de travail) dont le cylindre est fixé à la structure fixe 206 et une tige fixée au coulisseau 218. Afin d'orienter le flux d'air sortant de la fenêtre 220, des cascades peuvent être fixées sur le coulisseau 218 en regard de la fenêtre 220.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La nacelle 102 comporte une pluralité de lames 250, chacune étant montée mobile en rotation sur le coulisseau 218 autour d'un axe de rotation qui est ici globalement parallèle à l'axe longitudinal X. Chaque lame 250 est ainsi mobile entre une position escamotée (fig. 2) dans laquelle la lame 250 est en dehors de la veine 204 et une position déployée (fig. 3) dans laquelle la lame 250 est en travers de la veine 204 afin de dévier le flux secondaire 208 vers la fenêtre 220.

Chaque lame 250 est montée mobile au niveau d'une première extrémité tandis qu'une deuxième extrémité se rapproche du moteur 20 lorsque la lame 250 est déployée afin d'obturer au mieux la veine 204.

Les lames 250 sont décalées angulairement de proche en proche autour de l'axe longitudinal X. Le nombre de lames 250 ainsi que la forme de chacune d'elles dépendent des dimensions du turboréacteur double flux 100 ainsi que de la largeur de chaque lame 250 afin qu'en position déployée, les lames 250 obturent la plus grande partie de la veine 204.

Le passage de la position escamotée à la position déployée s'effectue par une rotation de la lame 250 vers l'intérieur du turboréacteur 100.

La position escamotée peut être adoptée lorsque le coulisseau 218 est en position avancée ou en position reculée. La position déployée ne peut être adoptée que lorsque le coulisseau 218 est en position reculée.

Le coulisseau 218 porte également un système de manœuvre 400 qui déplace chaque lame 250 de la position escamotée à la position déployée.

Le fonctionnement consiste ainsi, à partir de la position avancée/escamotée, à commander l'activation des actionneurs pour déplacer le coulisseau 218 de la position avancée à la position reculée. Au cours ou à la fin de ce déplacement, le système de manœuvre 400 déplace les lames 250 de la position escamotée à la position déployée.

A l'inverse, le fonctionnement consiste ainsi, à partir de la position reculée/déployée, à commander l'activation des actionneurs pour déplacer le coulisseau 218 de la position reculée à la position avancée. Au cours ou au début de ce déplacement, le système de manœuvre 400 déplace les lames 250 de la position déployée à la position escamotée.

L'utilisation des lames 250 montées rotatives sur le coulisseau 218 permet un allégement de l'ensemble par rapport à l'utilisation de portes d'inversion de l'état de la technique.

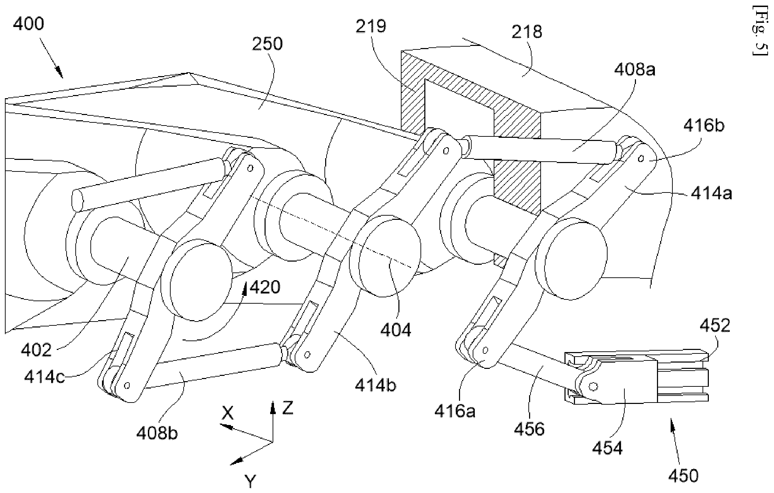

La figure 5 montre le système de manœuvre 400 qui est monté sur l'ensemble mobile 214 et plus particulièrement sur le coulisseau 218.

Pour chaque lame 250, le système de manœuvre 400 comporte un arbre 402 qui est monté mobile en rotation sur le coulisseau 218 autour d'un axe de rotation 404, et sur lequel la lame 250 est fixée. Sur la figure 5, chaque lame 250 est tronquée pour faciliter la compréhension du mécanisme et seules trois lames 250 sont montrées en position escamotée. En outre, sur la figure 5, le coulisseau 218 est vu en coupe. L'axe de rotation 404 est ici globalement parallèle à l'axe longitudinal X.

Pour chaque arbre 402, le système de manœuvre 400 comporte également un fléau 414a-c qui est fixé à l'arbre 402 et comporte deux extrémités 416a-b disposées de part et d'autre dudit arbre 402. Chaque fléau 414a-c est ici dans un plan perpendiculaire à l'arbre 402.

Dans le mode de réalisation de l'invention présenté sur la figure 5, la direction entre les deux extrémités est orientée globalement radialement par rapport à l'axe longitudinal X. C'est-à-dire qu'une première extrémité 416a est disposée entre l'axe longitudinal X et l'axe de rotation 404 et qu'une deuxième extrémité 416b est disposée au-delà de l'axe de rotation 404 par rapport à l'axe longitudinal X. Bien sûr, une orientation différente est possible.

Le décalage angulaire des lames 250 entraîne le décalage angulaire des arbres 402 et des fléaux 414a-c. Pour un premier fléau 414a, un deuxième fléau 414b et un troisième fléau 414c angulairement consécutifs autour de l'axe longitudinal X, le système de manœuvre 400 comporte deux bielles 408a-b où la première bielle 408a présente deux extrémités dont l'une est montée articulée sur la deuxième extrémité 416b du premier fléau 414a et dont l'autre est montée articulée sur la deuxième extrémité 416b du deuxième fléau 414b, et où la deuxième bielle 408b présente deux extrémités dont l'une est montée articulée sur la première extrémité 416a du deuxième fléau 414b et dont l'autre est montée articulée sur la première extrémité 416a du troisième fléau 414c.

Les deux bielles 408a-b qui sont fixées sur un même arbre 402 sont ainsi décalées de part et d'autre de l'axe de rotation 404 et ainsi un tirage sur l'une des deux bielles 408a-b va se transformer en un poussage sur l'autre bielle 408b-a.

Le fonctionnement est alors le suivant dans le cas de la Fig. 5. Lorsqu'une force de traction est exercée sur la bielle qui est fixée à la première extrémité 416a du premier fléau 414a, celui-ci pivote autour de l'axe de rotation 404 dans le sens de la flèche 420 et repousse en même temps la bielle 408a qui est fixée à la deuxième extrémité 416b du premier fléau 414a, ce qui entraîne en cascade la rotation du deuxième fléau 414b autour de son axe 404 et dans le même sens (420) et ainsi de suite.

La rotation dans le sens de la flèche 420 va entraîner le déplacement des lames 250 de la position escamotée à la position déployée.

A l'inverse, lorsqu'une force de poussage est exercée sur la bielle qui est fixée à la première extrémité 416a du premier fléau 414a, celui-ci pivote autour de l'axe de rotation 404 dans le sens inverse de la flèche 420 et tire en même temps la bielle 408a qui est fixée à la deuxième extrémité 416b du premier fléau 414a, ce qui entraîne en cascade la rotation du deuxième fléau 414b autour de son axe 404 et dans le même sens (inverse de 420) et ainsi de suite.

La rotation dans le sens inverse de la flèche 420 va entraîner le déplacement des lames 250 de la position déployée à la position escamotée.

Le système de manœuvre 400 comporte également un système d'actionnement 450 qui réalise le déplacement en rotation de l'un des fléaux 414a-c, ici le premier fléau 414a, dans un sens et dans l'autre en tirant ou en poussant l'une des extrémités dudit premier fléau 414a.

Dans le mode de réalisation de l'invention présenté sur la Fig. 5, le système d'actionnement 450 comporte un rail 452 qui est monté fixe sur l'ensemble mobile 214, un chariot 454 monté coulissant sur le rail 452 et une bielle d'actionnement 456 montée articulée entre le chariot 454 et la première extrémité du premier fléau 414a.

Le système d'actionnement 450 comprend également tous moyens moteur appropriés permettant d'assurer le déplacement du chariot 454 le long du rail 452, comme par exemple un vérin monté articulé entre le chariot 454 et l'ensemble mobile 214, un moteur équipé d'une crémaillère, etc. L'unité de contrôle commande également les moyens moteur.

La liaison entre le chariot 454 et le rail 452 prend ici la forme d'une double queue d'aronde. Le déplacement de chaque lame 250 se transmet alors de proche en proche, et le déplacement de l'un des fléaux 414a-c va entraîner le déplacement de l'ensemble des fléaux 414a-c.

Chaque articulation entre un fléau 414a-c et une bielle 456, 408a-b, prend la forme d'une chape dont l'axe de rotation est parallèle à l'axe longitudinal X.

Pour une bonne répartition des efforts, les deux extrémités 416a-b sont symétriques par rapport à l'axe de rotation 402.

La description a été plus particulièrement faite dans le cas des premières extrémités 416a qui sont à l'intérieur par rapport aux deuxièmes extrémités 416b, mais il est possible d'inverser les positions des extrémités et donc des bielles 408a-b.

De la même manière, la description a été plus particulièrement faite dans le cas où la bielle d'actionnement 456 est montée sur la première extrémité 416a, mais il est possible de la monter sur la deuxième extrémité 416b qui devient alors une première extrémité et les positions des bielles 408a-b sont alors inversées par rapport à la figure 5.

Chaque lame 250 s'étend dans un plan globalement perpendiculaire à l'axe longitudinal X. Chaque lame 250 est montée mobile sur le pourtour du coulisseau 218. Lorsque les lames 250 sont en position escamotée, elles se superposent selon l'axe longitudinal X.

Le déplacement de toutes les lames 250 est alors relativement simple à mettre en œuvre car il suffit d'effectuer une rotation de l'arc 408.

Dans le mode de réalisation de l'invention présenté à la figure 5, le coulisseau 218 comporte un profilé en U 219 coaxial avec l'axe longitudinal X et ouvert vers l'axe longitudinal X. Le profilé en U 219 forme une cage à l'intérieur de laquelle les lames 250 sont montées mobiles en rotation et où les arbres 402 traversent une paroi du profilé en U 219.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant un axe longitudinal (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202),
- un ensemble mobile (214) présentant un capot mobile (216) et un coulisseau (218), le capot mobile (216) étant fixé au coulisseau (218), le coulisseau (218) étant mobile en translation sur la structure fixe (206) selon une direction de translation entre une position avancée dans laquelle le coulisseau (218) est positionné de manière à ce que le capot mobile (216) soit rapproché du carter de soufflante (202) et une position reculée dans laquelle le coulisseau (218) est positionné de manière à ce que le capot mobile (216) soit éloigné du carter de soufflante (202) pour définir entre eux une fenêtre (220) ouverte entre la veine (204) et l'extérieur de la nacelle (102),
- une pluralité de lames (250), chacune comportant une première extrémité montée mobile en rotation sur le coulisseau (218) autour d'un axe de rotation et où les lames (250) sont décalées angulairement de proche en proche autour de l'axe longitudinal (X), où chaque lame (250) est mobile entre une position escamotée dans laquelle la lame (250) est en dehors de la veine (204) et une position déployée dans laquelle la lame (250) est en travers de la veine (204),
- un ensemble d'actionneurs assurant le déplacement du coulisseau (218) entre la position avancée et la position reculée, et inversement, et
- un système de manœuvre (400) destiné à déplacer chaque lame (250) de la position escamotée à la position déployée et inversement, où le système de manœuvre (400) comporte :
- pour chaque lame (250), un arbre (402) monté mobile en rotation sur le coulisseau (218) autour d'un axe de rotation (404), et sur lequel la lame (250) est fixée,
- pour chaque arbre (402), un fléau (414a-c) fixé à l'arbre (402) et qui présente une première extrémité (416a) et une deuxième extrémité (416b) qui sont disposées de part et d'autre dudit arbre (402),
- pour un premier fléau (414a), un deuxième fléau (414b) et un troisième fléau (414c) angulairement consécutifs, deux bielles (408a-b) où la première bielle (408a) présente deux extrémités dont l'une est montée articulée sur la deuxième extrémité (416b) du premier fléau (414a) et dont l'autre est montée articulée sur la deuxième extrémité (416b) du deuxième fléau (414b), et où la deuxième bielle (408b) présente deux extrémités dont l'une est montée articulée sur la première extrémité (416a) du deuxième fléau (414b) et dont l'autre est montée articulée sur la première extrémité (416a) du troisième fléau (414c), et
- un système d'actionnement (450) qui réalise la mise en rotation de l'un des fléaux (414a-c) dans un sens et dans l'autre.

2. Turboréacteur double flux (100) selon la revendication 1, **caractérisé en ce que** les deux extrémités (416a-b) sont symétriques par rapport à l'axe de rotation (402).

3. Aéronef (10) comportant au moins un turboréacteur double flux (100) selon l'une des revendications précédentes.

## Patentansprüche

1. Zweistrom-Turbostrahltriebwerk (100), aufweisend eine Längsachse (X) sowie ein Triebwerk (20) und eine das Triebwerk (20) umgebende Gondel (102), die ein Gebläsegehäuse (202) aufweist, wobei ein Kanal (204) einer Sekundärströmung (208) zwischen der Gondel (102) und dem Triebwerk (20) begrenzt ist, wobei in dem Kanal eine Luftströmung in einer Strömungsrichtung zirkuliert, wobei die Gondel (102) Folgendes aufweist:
- eine feststehende Struktur (206), die an dem Gebläsegehäuse (202) befestigt ist,
- eine bewegliche Anordnung (214), die eine bewegliche Haube (216) und einen Schieber (218) aufweist, wobei die bewegliche Haube (216) an dem Schieber (218) befestigt ist, wobei der Schieber (218) an der feststehenden Struktur (206) in einer Translationsrichtung zwischen einer vorgeschobenen Position, in der der Schieber (218) so positioniert ist, dass die bewegliche Haube (216) dem Gebläsegehäuse (202) angenähert wird, und einer zurückgezogenen Position translationsbeweglich ist, in der der Schieber (218) so positioniert ist, dass die bewegliche Haube (216) von dem Gebläsegehäuse (202) weg bewegt wird, um zwischen ihnen ein offenes Fenster (220) zwischen dem Kanal (204) und dem Äußeren der Gondel (102) zu definieren,
eine Vielzahl von Blättern (250), die jeweils ein erstes Ende aufweisen, das drehbeweglich an dem Schieber (218) um eine Rotationsachse montiert ist, und wobei die Blätter (250) sukzessive winkelförmig um die Längsachse (X) versetzt sind, wobei jedes Blatt (250) zwischen einer eingeklappten Position, in der das Blatt (250) außerhalb des Kanals (204) liegt, und einer Einsatzposition, in der das Blatt (250) über dem Kanal (204) liegt, beweglich ist,
- eine Anordnung von Aktuatoren, die für das Bewegen des Schiebers (218) zwischen der vorgeschobenen Position und der zurückgezogenen Position und umgekehrt sorgen und
- ein Bediensystem (400), das dazu bestimmt ist, jedes Blatt (250) aus der eingeklappten Position in die Einsatzposition und umgekehrt zu bewegen, wobei das Bediensystem (400) Folgendes aufweist:
- für jedes Blatt (250) eine um eine Rotationsachse (404) drehbeweglich an dem Schieber (218) montierte Welle (402), an der das Blatt (250) befestigt ist,
- für jede Welle (402) ein an der Welle (402) befestigtes Ausgleichselement (414a-c), das ein erstes Ende (416a) und ein zweites Ende (416b) aufweist, die beiderseits der Welle (402) angeordnet sind,
- für ein erstes Ausgleichselement (414a), ein zweites Ausgleichselement (414b) und ein drittes Ausgleichselement (414c), die winkelmäßig aufeinanderfolgen, zwei Koppeln (408a-b), wobei die erste Koppel (408a) zwei Enden aufweist, von denen eines gelenkig an dem zweiten Ende (416b) des ersten Ausgleichselements (414a) montiert ist und das andere gelenkig an dem zweiten Ende (416b) des zweiten Ausgleichselements (414b) montiert ist, und wobei die zweite Koppel (408b) zwei Enden aufweist, von denen eines gelenkig an dem ersten Ende (416a) des zweiten Ausgleichselements (414b) montiert ist und das andere gelenkig an dem ersten Ende (416a) des dritten Ausgleichselements (414c) montiert ist, und
- ein Betätigungssystem (450), das eines der Ausgleichselemente (414a-c) in einer und der anderen Richtung in Drehung versetzt.

2. Zweistrom-Turbostrahltriebwerk (100) nach Anspruch 1, **dadurch gekennzeichnet, dass** die beiden Enden (416ab) bezüglich der Rotationsachse (402) symmetrisch sind.

3. Luftfahrzeug (10), aufweisend mindestens ein Zweistrom-Turbostrahltriebwerk (100) nach einem der vorhergehenden Ansprüche.

## Claims

1. Turbofan engine (100) having a longitudinal axis (X) and comprising a motor (20) and a nacelle (102) that surrounds the motor (20) and has a fan casing (202), wherein a duct (204) for a bypass stream (208) is delimited between the nacelle (102) and the motor (20) and in which an air stream circulates in a flow direction, said nacelle (102) having:
- a fixed structure (206) fixed to the fan casing (202),
- a movable assembly (214) having a movable cowl (216) and a slider (218), the movable cowl (216) being fixed to the slider (218), the slider (218) being movable in translation on the fixed structure (206) in a translation direction between an advanced position, in which the slider (218) is positioned such that the movable cowl (216) is moved close to the fan casing (202), and a retracted position, in which the slider (218) is positioned such that the movable cowl (216) is moved away from the fan casing (202) so as to define, between them, an open window (220) between the duct (204) and the outside of the nacelle (102),
- a plurality of blades (250), each having a first end that is mounted so as to be able to rotate on the slider (218) about an axis of rotation and wherein the blades (250) are angularly offset from one to the next about the longitudinal axis (X), wherein each blade (250) is able to move between a stowed position, in which the blade (250) is outside the duct (204), and a deployed position, in which the blade (250) is across the duct (204),
- a set of actuators that move the slider (218) between the advanced position and the retracted position and vice versa, and
- a manoeuvring system (400) intended for moving each blade (250) from the stowed position to the deployed position and vice versa, wherein the manoeuvring system (400) has:
- for each blade (250), a shaft (402) that is mounted so as to be able to rotate on the slider (218) about an axis of rotation (404), and to which the blade (250) is fixed,
- for each shaft (402), a balance beam (414a-c) fixed to the shaft (402) and having a first end (416a) and a second end (416b), which are disposed on either side of said shaft (402),
- for a first balance beam (414a), a second balance beam (414b) and a third balance beam (414c) that are angularly consecutive, two connecting rods (408a-b), wherein the first connecting rod (408a) has two ends, one of which is mounted articulated on the second end (416b) of the first balance beam (414a) and the other of which is mounted articulated on the second end (416b) of the second balance beam (414b), and wherein the second connecting rod (408b) has two ends, one of which is mounted articulated on the first end (416a) of the second balance beam (414b) and the other of which is mounted articulated on the first end (416a) of the third balance beam (414c), and
- an actuation system (450) which produces the rotation of one of the balance beams (414a-c) in one direction and in the other.

2. Turbofan engine (100) according to Claim 1, **characterized in that** the two ends (416a-b) are symmetrical with respect to the axis of rotation (402).

3. Aircraft (10) comprising at least one turbofan engine (100) according to one of the preceding claims.
